## Europäisches Patentamt

# European Patent Office

(11) Veröffentlichungsnummer: **0 216 193**

**B1**

# Office européen des brevets

# EUROPÄISCHE PATENTSCHRIFT

(45) Veröffentlichungstag der Patentschrift:
**12.07.89**

(51) Int. Cl.⁴: **C 08 L 23/16,** C 08 L 23/10, C 08 L 91/00

(21) Anmeldenummer: **86111982.4**

(22) Anmeldetag: **29.08.86**

(54) **Thermoplastische Elastomere.**

(30) Priorität: **11.09.85 DE 3532357**

(43) Veröffentlichungstag der Anmeldung:
**01.04.87 Patentblatt 87/14**

(45) Bekanntmachung des Hinweises auf die Patenterteilung:
**12.07.89 Patentblatt 89/28**

(84) Benannte Vertragsstaaten:
**AT BE CH DE FR GB IT LI NL SE**

(56) Entgegenhaltungen:
**FR-A-2 320 969**
**FR-A-2 365 601**
**US-A-3 926 901**
**US-A-4 132 698**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk (DE)**

(72) Erfinder: **Eisele, Ulrich, Dr., Alfred- Kubin- Strasse 13, D-5090 Leverkusen (DE)**
Erfinder: **Jache, Dieter, D.I., Marienburger Strasse 1, D-5063 Overath (DE)**
Erfinder: **Mott, Ludwig, Dr., Karl- Jaspers- Strasse 97, D-5090 Leverkusen 3 (DE)**
Erfinder: **Schabel, Karl- Heinz, Unterwietsche 14, D-5093 Burscheid (DE)**

EP 0 216 193 B1

**Beschreibung**

Die Erfindung betrifft thermoplastische Elastomere aus einem Ethylen-Propylen-Dien-Kautschuk (EPDM), Polypropylen (PP), einem Weichmacheröl und wenigstens einer weiteren Komponente.

Thermoplastische Elastomere aus EPDM und PP sind bekannt; sie zeichnen sich durch eine verhältnismäßig große Härte aus und werden deswegen oft mit Weichmacheröl versetzt und so weicher eingestellt. Ölgestreckte thermoplastische Elastomere aus EPDM und PP sind ebenfalls bekannt, beispielsweise aus EP-OS-52 469 und der darin genannten weiteren Literatur.

Das Weichmacheröl, im allgemeinen ein naphthenisches oder paraffinisches Öl, hat die nachteilige Eigenschaft, aus dem thermoplastischen Elastomer, bzw. aus den daraus hergestellten Formkörpern, zu einem Teil langsam auszuschwitzen. Dies führt zu einer unangenehm klebrigen und leicht verschmutzenden Oberfläche. Eine Verringerung der Ölmenge um den später ausgeschwitzten Betrag hilft nicht, da weiterhin Öl ausschwitzt, wenn auch in geringerem Umfang.

Es besteht daher ein Bedarf an ölgestreckten thermoplastischen Elastomeren, bei denen die Ölausschwitzung auf ein akzeptables Maß verringert ist.

Überraschenderweise wurde nun gefunden, daß diese Aufgabe dadurch gelöst wird, daß man der Polymermischung aus EPDM, PP und Weichmacheröl ein weiteres Polymer in geringer Menge zumischt.

Gegenstand der Erfindung sind daher thermoplastische Elastomere aus

48 bis 88 Gew.-% Ethylen-Propylen-Dien-Kautschuk (EPDM),
10 bis 50 Gew.-% Propylen (PP) und
2 bis 20 Gew.-% eines dritten Polymers,

wobei das dritte Polymer ein Blockcopolymerisat aus wenigstens zwei unterschiedlichen Blöcken A und B ist und A ein Polystyrolblock und B ein Block aus Butadien oder Isopren, der nachträglich partiell oder total hydriert sein kann, ist,

wobei die thermoplastischen Elastomeren 5 bis 60 Gew.-% Weichmacheröl, bezogen auf die Summe von EPDM, PP und dem dritten Polymer enthalten, und
gegebenenfalls weiteren üblichen Bestandteilen.

Weitere übliche Bestandteile sind Füllstoffe und Stabilisatoren.

In diesen Mischungen können die Kautschukanteile vulkanisiert sein.

Für die Vulkanisation der Kautschukanteile eignen sich alle aus der statischen Vulkanisation dieser Produkte bekannten Vulkanisationsmittel wie Schwefelverbindungen, Phenolharze, Peroxide.

Für eine erfindungsgemäße Anwendung sind EPDM-Kautschuke mit einem Ethylen-/Propylengewichtsverhältnis von 80 : 20 bis 40 : 60 und Mooney-Viskositäten (ML 1 + 4, 100°C) von 30 ME bis (ML 1 + 4, 140°C) von 170 ME geeignet. Das EPDM enthält 1 bis 15 Gew.-% Dien.

Bevorzugt werden Produkte mit einem Ethylen-/Propylen-Verhältnis von 70 : 30 bis 50 : 50 eingesetzt.

Als Polypropylen eignen sich die bekannten isotaktischen Polypropylene bzw. deren Copolymerisate mit z. B. Ethylen (maximal 6 Gew.-%, von der Gesamtmonomermenge) und Schmelzindices ($MFI_{230/2,16}$) der Produkte zwischen 0,1 und 20, vorzugweise zwischen 1 und 13 g/10 min.

Bevorzugte Produkte haben einen Styrolanteil von 10 - 40 Gew.-%, von dem wenigstens 80 Gew.-% als Blockeinheiten eingebaut sind. Die Viskositäten einer 20 gew.-%-igen Lösung dieser Produkte in Toluol bei 25°C betragen 1 bis 2,5 Pa s.

Bevorzugt sind Diblock- und Triblockpolymere. Die Blockcopolymeren sind bekannt, ebenso die Ethylen-Propylen-Dien-Terpolymeren, bei denen als Dien-Komponente vor allem Dicyclopentadien und Ethylidennorbornen in Frage kommen, und das Polypropylen.

Vorzugsweise enthält die Polymermischung 60 bis 80 Gew.-% EPDM, 15 bis 30 Gew.-%. PP und 3 bis 10 Gew.-% des dritten Polymeren sowie 10 bis 40 Gew.-% Weichmacheröl.

Die beanspruchten thermoplastischen Polymeren können weiterhin übliche Bestandteile wie Füllstoffe, Alterungsschutzmittel, Farbstoffe und ähnliches enthalten.

Die beanspruchten Mischungen können in jeder geeigneten Vorrichtung, z. B. Innenmischer (Banbury-Mischer), Extruder-mischer, Transfer-Mischer, hergestellt werden.

**Beispiel**

In einem auf 79°C geheizten 2 l Banbury-Mischer, werden EPDM, Polypropylen, gegebenenfalls Blockcopolymerisat und Peroxid bei 120 Upm 1,5 - 2 Min. gemischt. Dabei steigt die Temperatur auf 170°C. Bei dieser Temperatur wird weitere 2 Min. gemischt und dann die angegebene Menge Öl und gegebenenfalls Stabilisator zugegeben. Es wird weiter gemischt bis alles Öl eingearbeitet ist (ca. 3 Min.). Im Verlauf dieser Zeit steigt die Temperatur auf 205 - 210°C. Der Batch wird ausgeworfen und auf einem auf 170°C geheizten Walzwerk zu einem 4 mm dicken Fell ausgewalzt. Nach dem Erkalten wird in einer Schneidmühle granuliert. Aus dem Granulat werden Spritzplatten der Größe 110 x 75 x 6 mm hergestellt, an denen die Ölmigration wie folgt bestimmt wird:

Unter standardisierten Bedingungen wird die Oberfläche mit Aceton abgewaschen und luftgetrocknet. Dann wird die Platte bei 50°C 24 Stunden getempert und anschließend wieder in Aceton gelegt und so der Ölfilm abgewaschen. Der Acetonextrakt wird zur Trockne eingedampft und der Rückstand in mg/cm$^2$ berechnet.

Die Ergebnisse sind in der Tabelle 1 dargestellt.

Darin sind Blockpolymer I ein Butadienstyrol-Blockcopolymer vom Typ A-B mit einem Gehalt von 30 Gew.-%. Styrol, davon 24 Gew.-% Blockanteil, und einer Viskosität $\eta$ von 1,43 dl/g in Toluol bei 25°C; Blockcopolymer II ein Butadien-Styrol-Blockpolymer vom Typ A-B-A mit einem Gehalt von 28 Gew.-% Styrol, davon > 25 Gew.-% Blockanteil, und einer Lösungsviskosität (25 gew.-%-ig in Toluol, 25°C) von 1,2 Pa.s; Blockcopolymer III ein hydriertes Blockcopolymer II mit einer Lösungsviskosität (25 gew.-%-ig in Toluol, 25°C) von 1,2 Pa s; und Blockcopolymer IV ein Butadien-Styrol-Blockcopolymer vom Typ A-B-A, Segment B hydriert, mit einem Styrolgehalt von 14 Gew.-%, davon ) 13 Gew.-% Blockanteil, mit einer Lösungsviskosität (25 gew.-%-ig in Toluol, 25°C) von 1,3 Pa s.

B bezeichnet stets den Butadienblock.

Das eingesetzte EPDM bestand aus 54 Gew.-% Ethylen, 42,5 Gew.-% Propylen und 3,5 Gew.-% Dicyclopentadien und hatte eine Mooney-Viskosität (ML 1+4, 100°C) von 82 ME.

Das eingesetzte Polypropylen hatte einen Schmelzindex $MFI_{230/2,16}$ von 4 g/10 min.

**Tabelle 1**

| Versuch | A Vergl. | 1 | 2 | 3 | 4 | B Vergl. | 5 | 6 | 7 |
|---|---|---|---|---|---|---|---|---|---|
| EPDM | 76 | 70 | 70 | 70 | 70 | 76 | 72 | 72 | 70 |
| Polypropylen | 24 | 22 | 22 | 22 | 22 | 24 | 24 | 24 | 22 |
| 2,5-Dimethyl-2,5-bis-(t-butylperoxi)-hexan | 0,25 | 0,25 | 0,25 | 0,25 | 0,25 | 0,25 | 0,25 | 0,25 | 0,25 |
| Blockcopolymer I | - | 8 | - | - | - | - | 4 | - | 8 |
| Blockcopolymer II | - | - | 8 | - | - | - | - | 4 | - |
| Blockeopolymer III | - | - | - | 8 | - | - | - | - | - |
| Blockeopolymer IV | - | - | - | - | 8 | - | - | - | - |
| Paraffinöl | 20 | 20 | 20 | 20 | 20 | 30 | 30 | 30 | 30 |
| Ölmigration in mg/cm$^2$ | 1,35 | 0,25 | 0,40 | 0,45 | 0,50 | 1,50 | 0,52 | 0,50 | 0,35 |

**Patentansprüche**

1. Thermoplastische Elastomere aus

48 bis 88 Gew.-% Ethylen-Propylen-Dien-Kautschuk (EPDM),
10 bis 50 Gew.-% Polypropylen (PP) und
2 bis 20 Gew.-% eines dritten Polymers,

wobei das dritte Polymer ein Blockcopolymerisat aus wenigstens zwei unterschiedlichen Blöcken A und B ist und A ein Polystyrolblock und B ein Block aus Butadien oder Isopren, der nachträglich partiell oder total hydriert sein kann, ist,

wobei die thermoplastischen Elastomeren 5 bis 60 Gew.-% Weichmacheröl, bezogen auf die Summe von EPDM, PP und dem dritten Polymer enthalten, und

gegebenenfalls weiteren üblichen Bestandteilen.

2. Thermoplastische Elastomere nach Anspruch 1 aus

60 bis 80 Gew.-% EPDM,
15 bis 30 Gew.-% PP und
3 bis 10 Gew.-% des dritten Polymeren sowie
10 bis 40 Gew.-% Weichmacheröl.

3. Thermoplastische Elastomere nach Anspruch 1, wobei das EPDM ein Ethylen/Propylen-Gewichtsverhältnis von 80 : 20 bis 40 : 60, eine Mooney-Viskosität (ML 1 + 4, 100°C) von 30 bis (ML 1 + 4, 140°C) von 170 ME und einen Dien-Gehalt von 1 bis 15 Gew.-% hat.

4. Thermoplastische Elastomere nach Anspruch 1, wobei das Polypropylen einen Schmelzindex $MF_{230/2,16}$ von 0,1 bis 20 g/10 min hat.

5. Thermoplastische Elastomere nach Anspruch 1, wobei das dritte Polymer einen Styrolanteil von 10 bis 40 Gew.-% hat, von dem wenigstens 80 Gew.-% als Blockeinheiten eingebaut sind, und dessen 20 gew.-%-ige Lösung in Toluol bei 25°C eine Viskosität von 1 bis 2,5 Pa.s hat.

## Claims

1. Thermoplastic elastomers comprising:

48 to 88 %-by-wt ethylene-propyiene diene monomer (EPDM),
10 to 50 %-by-wt polypropylene (PP) and
2 to 20 %-by-wt of a third polymer.
whereby the third polymer is a block copolymer comprising at least two different blocks A and B, A being a polystyrene block and B being a butadiene or isoprene block, which can also be partially or totally hydrogenated,
whereby the thermoplastic elastomers contain 5 to 60 %-by-wt plasticizer oil, based on the total amount of EPDM, PP and the third polymer, and
if necessary further standard constituents.

2. Thermoplastic elastomers according to claim 1 comprising:

60 to 80 %-by-wt EPDM
15 to 30 %-by-wt PP and
3 to 10 %-by-wt of the third polymer and
10 to 40 %-by-wt plasticizer oil.

3. Thermoplastic elastomers according to claim 1, whereby the EPDM has an ethylene/propylene weight ratio of 80 : 20 up to 40 : 60, a Mooney-viscosity (ML 1 + 4, 140°C) of 170 ME and a diene content of 1 to 15 %-by-wt.

4. Thermoplastic elastomers according to claim 1, whereby the polypropylene has a melt index $MFI_{230/2.16}$ of 0.1 to 20 g/10 min.

5. Thermoplastic elastomers according to claim 1, whereby the third polymer has a styrene content of 10 to 40 %-by-wt, of which at least 80 %-by-wt is incorporated as block units, and having a viscosity of 1 to 2.5 Pa.s with a 20 %-by-wt styrene solution in toluene at 25°C.

## Revendications

1. Elastomères thermoplastiques composés de 48 à 88 % en poids de caoutchouc d'éthylènepropylène-diène (EDPM),

10 à 50 % en poids de polypropylène (PP) et
2 à 20% en poids d'un troisième polymère,

le troisième polymère étant un produit de copolymerisation par blocs à partir d'au moins deux blocs A et B différents et A étant un bloc polystyrène et 0 un bloc butadiène ou isoprène qui peut par la suite être partiellement ou totalement hydrogéné,
les élastomères thermoplastiques comportant une huile plastifiante à raison de 5 à 60 % en poids, ramenés au total de l'EPDM, du PP et du troisième polymère, et
éventuellement d'autres composants usuels.

2. Elastomères thermoplastiques selon la revendication 1, composés de

60 à 80 % en poids d'EDPM,
15 à 30 % en poids de PP et
3 à 10 % en poids du troisième polymère, ainsi que
10 à 40 % en poids d'huile plastifiante.

3. Elastomères thermoplastiques selon la revendication 1, dans lesquels l'EDPM a un rapport pondéral éthylène/propylène de 80 : 20 à 40 : 60, une viscosité Mooney (ML 1 + 4, 100°C) de 30 à (ML 1 + 4, 140°C) de 170 ME et contient 1 à 1 5% en poids de diène.

4. Elastomères thermoplastiques selon la revendication 1, dans lesquels le polypropylène a un indice de fusion $MFI_{230/2,16}$ de 0,1 à 20 g/10 min.

5. Elastomères thermoplastiques selon la revendication 1, dans lesquels le troisième polymère comporte une part de styrène de 10 - 40 % en poids, dont au moins 80 % en poids sont présents sous forme d'unités-blocs, et dont une solution à 20 % en poids dans le toluène a une viscosité de 1 à 2,5 Pa.s à 250°C.

4